(19)

**Europäisches Patentamt**
**European Patent Office**
**Office européen des brevets**

(11) **EP 4 672 089 A1**

(12) **EUROPEAN PATENT APPLICATION**

(43) Date of publication:
**31.12.2025 Bulletin 2026/01**

(51) International Patent Classification (IPC):
**G06N 3/0455** (2023.01) **G06N 3/0895** (2023.01)
**G06N 5/022** (2023.01)

(21) Application number: **25180673.3**

(52) Cooperative Patent Classification (CPC):
**G06N 3/0455; G06N 3/0895; G06N 5/022**

(22) Date of filing: **04.06.2025**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **27.06.2024 CN 202410850755**

(71) Applicant: **Robert Bosch GmbH**
**70442 Stuttgart (DE)**

(72) Inventors:
• **GAN, Tingyue**
  **Shanghai (CN)**
• **ZHANG, Hans**
  **Shanghai (CN)**

(54) **GENERATION AND USAGE METHOD, DEVICE, ELECTRONIC DEVICE, AND PRODUCT OF GRAPH NEURAL NETWORK**

(57) Examples of the present disclosure involve a generation method, a usage method, a device, an electronic device, and a computer program product of a graph neural network. The generation method comprises generating at least one categorical embedding based on target domain knowledge. The generation method further comprises determining node embeddings of the training graph using at least one categorical embedding and original node features of the training graph. The generation method further comprises generating a graph neural network using the determined node embeddings of the training graph. The method of generating a graph neural network consistent with examples of the present disclosure are capable of infusing domain knowledge into a graph neural network such that the graph neural network understands the domain knowledge. In this way, the graph neural network can understand the true semantic and contextual information of the target domain, thus granting it domain generality.

FIG. 3

**Description**

Technical Field

Examples of the present disclosure relate generally to the field of artificial intelligence technology, and in particular, to a generation method, a usage method, a device, an electronic device, and a computer program product of a graph neural network.

Background

In recent years, various technologies related to artificial intelligence have flourished, such as Knowledge Graph (KG), Graph Neural Network (GNN), and the like. A knowledge graph is a graph-based data structure that represents knowledge in the form of triples of entities and relations. Graph neural network is a deep learning technology specifically used to process graph data. Graph neural networks capture the topological structure and attribute information of data through the representation of nodes and edges. By combining graph neural networks with knowledge graphs, full play can be given to their respective advantages, improving knowledge representation and reasoning ability and providing strong support for the development of the field of artificial intelligence.

Summary of the Invention

Examples of the present disclosure provide a generation method, a usage method, a device, an electronic device, and a computer program product of a graph neural network.

According to a first aspect of the present disclosure, a method of generating a graph neural network is provided. The generation method comprises generating at least one categorical embedding based on target domain knowledge. The generation method further comprises determining node embeddings of the training graph using the at least one categorical embedding and original node features of the training graph. The generation method further comprises generating a graph neural network using the determined node embeddings of the training graph.

According to a second aspect of the present disclosure, a method of using a graph neural network is provided. The graph neural network is generated using the generation method described in the first aspect of the present disclosure. The usage method comprises inputting the graph to be tested into the graph neural network to obtain the output node embedding of the graph to be tested. The usage method further comprises inputting the output node embedding of the graph to be tested into the prediction head to obtain a prediction result about the graph to be tested. The prediction head is determined according to the downstream task.

According to a third aspect of the present disclosure, a device for generating a graph neural network is provided. The generating device comprises: a generation module, a determination module, and a training module. The generation module is configured to generate at least one categorical embedding based on target domain knowledge. The determination module is configured to determine node embeddings of the training graph using the at least one categorical embedding and original node features of the training graph. The training module is configured to generate a graph neural network using the determined node embeddings of the training graph.

According to a fourth aspect of the present disclosure, an electronic device is provided. The electronic device comprises: at least one processor and memory. The memory is coupled to the at least one processor and has instructions stored thereon. The instructions, when executed by the at least one processor, cause the electronic device to execute the generation method according to the first aspect of the present disclosure or the usage method according to the second aspect of the present disclosure.

According to a fifth aspect of the present disclosure, a computer program product is provided. The computer program product is tangibly stored on a non-transitory computer-readable medium and includes machine-executable instructions. The machine-executable instructions are used to execute the generation method according to the first aspect of the present disclosure or the usage method described according to the second aspect of the present disclosure.

According to a sixth aspect of the present disclosure, a machine-readable storage medium is provided. The machine-readable storage medium stores machine-executable instructions. The machine-executable instructions are executed by the processor to implement the steps of the generation method in the first aspect of the present disclosure or the steps of the usage method according to the second aspect of the present disclosure.

Brief Description of the Drawings

The exemplary examples of the present disclosure will be described in further detail in conjunction with accompanying drawings in order to further clarify the above-mentioned and other objectives, features and advantages of the present disclosure, wherein in the exemplary examples of the present disclosure, the same reference number typically represents the same parts.

FIG. 1 shows a schematic diagram of an exemplary environment in which the device and/or method according to examples of the present disclosure may be implemented.
FIG. 2 illustrates an exemplary flow chart of a method for generating a neural network according to examples of the present disclosure.
FIG. 3 illustrates an exemplary schematic diagram of a method for generating a neural network according to examples of the present disclosure.

FIG. 4 illustrates a further exemplary schematic diagram of a method for generating a neural network according to examples of the present disclosure.

FIG. 5 illustrates a schematic diagram of a device for generating a neural network according to examples of the present disclosure.

FIG. 6 illustrates a schematic block diagram of an electronic device suitable for implementing examples of the present disclosure.

In the various accompanying drawings, the same or corresponding numbers represent the same or corresponding portions. The elements in the drawings are schematic and not drawn to scale.

Detailed Description of the Embodiments

The examples of the present disclosure will be described in further detail below with reference to the accompanying drawings. Although certain examples of the present disclosure are shown in the accompanying drawings, it should be understood that the present disclosure may be implemented in various forms and should not be construed as being limited to the examples set forth herein, rather these examples are provided for a more thorough and complete understanding of the present disclosure. It should be understood that the accompanying drawings and examples of the present disclosure are for exemplary purposes only and are not intended to limit the scope of protection of the present disclosure.

In the description of the examples of the present disclosure, the term "comprise" and other similar expressions should be understood as open-ended inclusion, that is, "comprising but not limited to". The term "based on" should be understood as "at least partially based on". The term "one example" or "the example" should be understood as "at least one example". The terms "first", "second", etc., can refer to different or the same objects. The text below may comprise other specific and implicit meanings.

As noted above, various technologies in the field of artificial intelligence have flourished. Today, digital networks and knowledge graphs are widely used in a variety of fields. By combining graph neural networks with knowledge graphs, full play can be given to their respective advantages, improving the ability of knowledge representation and reasoning and providing strong support for the development of the field of artificial intelligence. For example, knowledge graphs can be used to represent the attribute information of multiple elements in a system, environment, or application scenario, as well as the relationship information between elements. However, the knowledge graph may not include attribute information and/or relationship information for all elements in the system, environment, or application scenario. It is expected to supplement the missing attribute information and/or relationship information in the knowledge graph in order to obtain more knowledge. Because such knowledge graphs are often large and complex, missing attribute information and/or relationship information often needs to be supplemented by domain experts, which is very labor-intensive and time-consuming.

For example, in dynamic industrial environments (e.g., industrial visualization systems or industrial production line visualization systems), workers usually need to manage and control a large number of components. There are often relationships between these components. For ease of management, the attribute information of these components and the relationship information between them can be obtained with knowledge graphs. However, the knowledge graph generated for a dynamic industrial environment may not include all the latest attribute information or the latest relationship information for all components. Therefore, experts are needed to supplement the information missing in the above-mentioned knowledge graph based on their domain knowledge. This allows others to query the latest information in the industrial environment in the knowledge graph to handle related business. However, if experts are needed to manually supplement missing information in the knowledge graph, this is time-consuming, inefficient, and a waste of human resources. Therefore, it is expected that the knowledge graph will be automatically supplemented to increase efficiency and save human resources.

In one implementation of automatically supplementing the knowledge graph, the knowledge graph can be input into a graph neural network (which may also be alternatively referred to as a graph neural network model in this context) to predict the status of various elements in a dynamic industrial environment through the graph neural network, thereby supplementing the missing information in the knowledge graph. For example, semantic knowledge can be extracted from the node attributes of the knowledge graph and converted into node embeddings. The node embeddings are then used to generate a graph neural network. In this way, the graph neural network can learn semantic knowledge from node embeddings so as to output prediction results for the knowledge graph to be predicted in subsequent use.

However, in the above implementations, the graph neural network used for the knowledge graph often only focuses on the knowledge of the knowledge graph itself (e.g., node attributes) generated from the dynamic industrial environment, without combining specialized domain knowledge (e.g., specific industrial domain knowledge) with the graph neural network. If a graph neural network can be generated for a specific domain (e.g., for a specific industrial environment), it can make the graph neural network smarter and improve the accuracy of prediction results for downstream tasks.

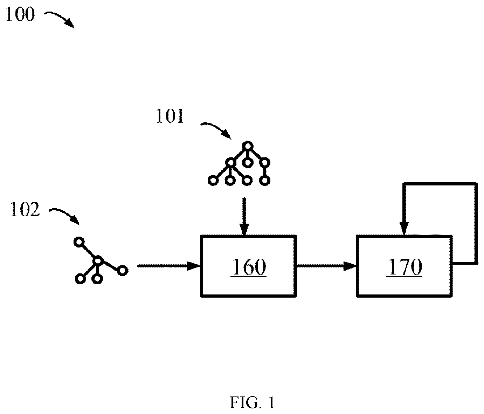

Accordingly, the present disclosure proposes a method of generating a graph neural network. This generation method proposes to integrate target domain knowledge into the graph neural network to generate a graph neural network with domain knowledge. Such a graph neural network is capable of understanding the true semantics and context of a target domain, and thus is capable of being domain-general for application in a variety of scenarios in the target domain. The examples of the present disclosure will be described in further detail below in conjunction with the accompanying drawings, wherein FIG. 1 shows a schematic diagram of an example environment 100 in which the device and/or method of the present disclosure may be implemented. As shown in FIG. 1, target domain knowledge 101 and training data 102 for a knowledge graph may be generated as input data through an input module 160. In this way, the input data incorporates the structural and semantic features of the training data as well as the target domain knowledge. The graph neural network model 170 is iteratively trained based on the input data. The output of the graph neural network model 170 is used to calculate a loss function. The loss function is used to adjust the parameters of the graph neural network model 170. In this way, the desired graph neural network can be generated by minimizing the loss function through iterative training. It is to be noted that the graph neural network discussed herein may include only an encoder or both an encoder and a decoder. The generated graph neural network learns the structural and semantic features of the training data as well as the target domain knowledge, and thus such a graph neural network is domain-general.

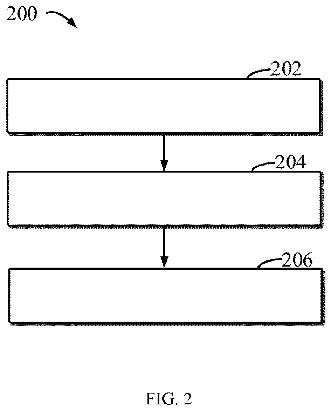

FIG. 2 illustrates an exemplary flow chart of a method 200 for generating a neural network according to examples of the present disclosure. Here, the electronic device that generates the graph neural network may be a computer device or cloud computing node.

At block 202 of FIG. 2, at least one categorical embedding is generated based on target domain knowledge. Target domain knowledge can be expressed through formalized knowledge representation. In some examples of the present disclosure, an ontology may be used as a data source for high-quality domain knowledge summarization. An ontology is a formal, explicit, and detailed description of a system of shared concepts. An ontology provides a shared vocabulary that is used to describe object types or concepts and their attributes and relationships in a specific domain. An ontology has structured features. The ontology may be expressed in Web Ontology Language (OWL).

Here, categorical embedding may refer to classified vectors or vectors generated according to categories. Categories in categorical embeddings are associated with target domain knowledge.

At block 204, node embeddings for the training graph are determined using the at least one categorical embedding and the original node features of the training graph. The training graph refers to the knowledge graph used for training. In examples where the target domain is a dynamic industrial environment, the training graph is a knowledge graph generated for the dynamic industrial environment. In some examples of the present disclosure, the training graph may be a homogeneous graph or a heterogeneous graph. It is to be noted that in context, a training graph may be multiple graphs obtained from a set of training graphs and is not limited to a single graph. The domain to which the training graph belongs is the same as or has commonalities with the target domain. The original node features of the training graph may be represented in the form of a matrix.

At block 206, a graph neural network is generated using the determined node embeddings of the training graph. In some examples of the present disclosure, nodes may be embedded as training data for a graph neural network and the graph neural network may be generated by training the graph neural network.

In some examples of the present disclosure, a heterogeneous graph transformer (HGT) can be used as the graph neural network to be trained as it includes a multi-layer attention mechanism to allow it to focus on different portions of the graph structure during learning. HGT can dynamically learn how different node and edges types contribute to the overall graph representation.

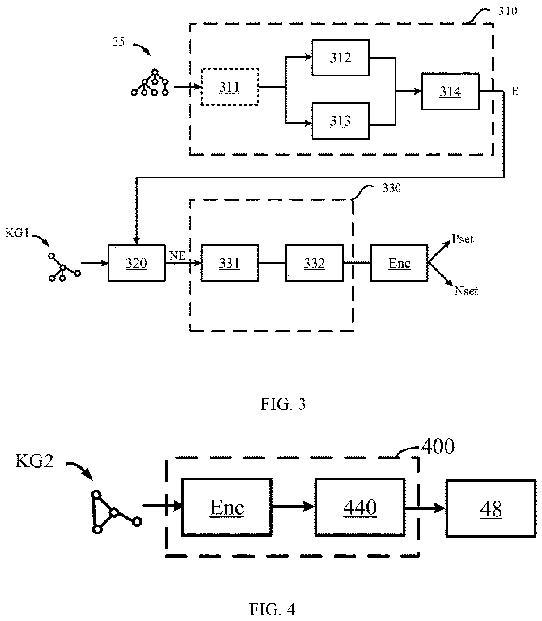

FIG. 3 illustrates an exemplary schematic diagram of a method for generating a neural network according to examples of the present disclosure. The following is a more detailed description of the exemplary process of the method for generating a graph neural network in conjunction with FIG. 3.

As noted above, target domain knowledge can be represented by an ontology. Referring to FIG. 3, the ontology 35 may be of a graphical structure with nodes and edges. The nodes correspond to entities and the edges represent the relationships between nodes. The structure (or schema) of the ontology 35 of the same domain may be similar and their entity types may also be similar. In one example, the ontology 35 may include a definition of an article, a definition of an author, and a definition of the relationship between the article and the author. Articles and authors are viewed as nodes in the ontology 35 and the relationships between articles and authors are viewed as edges in the ontology 35.

In some examples of the present disclosure, in the process of generating at least one categorical embedding according to target domain knowledge (block 202), the ontology 35 of target domain knowledge may be obtained first. The ontology 35 may be constructed from experience by experts in the target domain. Where the target domain is an industrial visualization system, the ontology 35 may include the attribute information of each element (component) in the industrial visualization system and/or the relationship information between each element (component). The at least one categorical embedding E may then be generated from the ontology 35 according to the entity type included in the ontology 35. Each categorical embedding corresponds to an entity type. In other words, a categorical embedding may be generated for each entity type.

In the example of FIG. 3, a categorical embedding model 310 may be used to generate a categorical embedding from the ontology 35. In some examples of the present disclosure, the categorical embedded model may generate an assertion set (ABox) 312 and a term set (TBox) 313 of the ontology 35 based on explicit knowledge in the ontology 35 and the schema of the ontology 35. Explicit knowledge in the ontology 35 refers to knowledge that is explicitly defined by the nodes and edges in the ontology 35. The categorical embedding corresponding to the entity type included in the ontology 35 is then generated according to the assertion set 312 and the term set 313 through the word embedding model 314 in the categorical embedding model 310. In one example, the assertion set 312 and the term set 313 can be converted into vectors, and their corresponding vectors can then be concatenated into an input vector as input to the word embedding model 314. The word embedding model 314 may classify input vectors to obtain a categorical embedding for each entity type. The word embedding model 314 may include Word2Vec, GloVe, etc. The word embedding model 314 may be pre-trained, generating categorical embedding intended to encompass the relationships and attributes defined by the ontology 35.

In some examples, the construction of the ontology 35 may not be complete. For example, an ontology 35 may only define the relationships between some nodes, while the relationships between other associated nodes is not explicitly defined in that ontology 35. In some examples of the present disclosure, before generating the assertion set (ABox) 312 and the term set (TBox) 313 of the ontology 35 according to the explicit knowledge in the ontology 35 and the schema of the ontology 35, logical reasoning can be performed on the ontology 35 according to the explicit knowledge in the ontology 35 and the schema of the ontology 35 to obtain the implicit knowledge in the ontology 35. Here, implicit logical axioms, such as equivalence class axioms, subclass axioms, and disjointness axioms, can be inferred using a reasoner 311. The reasoner 311 includes, for example, HermiT, Ontop, etc. In this way, the assertion set 312 and the term set 313 of the ontology 35 may be generated based on the explicit knowledge in the ontology 35, the schema of the ontology 35, and the implicit knowledge in the ontology 35. The assertion set (ABox) 312 and term set (TBox) 313 obtained in this way will be more accurate and complete, thereby making the classification operation performed by the word embedding model 314 more accurate.

In some examples of the present disclosure, in the process of determining a node embedding of the training graph using at least one categorical embedding and the original node features of the training graph (block 204), each node of the training graph KG1 may be used as a candidate node and the candidate entity type corresponding to the candidate node is determined. A categorical embedding corresponding to the candidate entity type is then selected from the at least one categorical embedding E generated at block 202. For example, if the candidate node is an article, a categorical embedding corresponding to the article is selected from the at least one categorical embedding E. If the candidate node is an author, a categorical embedding corresponding to the author is selected from the at least one categorical embedding E. The categorical embedding corresponding to the candidate entity type may then be concatenated with the node feature vector corresponding to the candidate node in the original node features of the training graph KG1 to generate the node embedding of the candidate node. The node embedding NE of the training graph KG1 can be generated from the node embeddings of each candidate node. In the example of FIG. 3, the concatenation operation may be performed using a concatenation module 320.

In one example, the node embedding of the candidate node may be generated by:

$$x'=\mathrm{concat}(e,x) \quad (1)$$

wherein e represents the categorical embedding corresponding to the candidate entity type of the candidate node in E, x represents the node feature vector of the candidate node, x' represents the node embedding of the candidate node, and concat() represents the function used to perform the concatenation operation. The node embeddings of each candidate node can be combined into the node embedding NE of the training graph KG1.

In one example, the node feature vector corresponding to an article in the original node features of the training graph KG1 may represent the publication time, length, topic, etc. of the article. The categorical embedding corresponding to an article might represent the definition of the article (e.g., what the article is). By concatenating the categorical embedding with the node feature vector, the generated node embedding NE can include the target domain knowledge.

In some examples of the present disclosure, concatenation may be performed in the order of categorical embedding and node feature vector. In some alternative examples of the present disclosure, concatenation may be performed in the order of node feature vector and categorical embedding. Examples of the present disclosure do not limit the concatenation order of categorical embedding and node feature vector.

In some examples of the present disclosure, if there is no categorical embedding corresponding to the candidate entity type in the at least one categorical embedding E, the categorical embedding corresponding to the candidate entity type is set as the default categorical embedding. The default categorical embedding is, for example, all 0, or empty. In some further examples of the present disclosure, if there is a categorical embedding in the at least one categorical embedding E that does not correspond to the candidate entity type, the categorical embedding may be ignored.

In some examples of the present disclosure, the training graph KG1 may be very large, for example, exceeding the capacity of the memory in a graphics processing unit (GPU). If training graph KG1 is used directly to train the graph neural network, it will consume a great deal of computing resources and may even cause data overflow. Therefore, the training graph KG1 can be sampled first and the samples obtained can be used as subgraphs of the training graph KG1. In the example of FIG. 3, the operation of generating the graph neural network may be performed by way of an encoder module 330. The encoder module 330 may comprise a preprocessing module 331, a deformation module 332, and an encoder Enc. Here, the encoder Enc is the graph neural network to be trained. In some examples of the present disclosure, a plurality of samples of the training graph KG1 may be generated at the preprocessing module 331 as subgraphs of the training graph KG1. It is to be noted that the training graph KG1 is shown merely schematically in FIG. 3. The training graph KG1 may in fact include more nodes and edges. In one example, several nodes may be randomly selected from the training graph KG1 as starting nodes. The number of starting nodes may be an empirical value. The starting node is at a random position in the training graph KG1. Starting from each starting node, a random walk is then used to sample the training graph KG1 to obtain at least one sample of the training graph KG1. After at least one sample is obtained for each starting node, multiple samples that meet predetermined rules may be selected from the samples obtained as subgraphs of the training graph KG1. In some examples of the present disclosure, the number of levels and number of nodes of the random walk may be predefined. The subgraphs can be of the same or different sizes. In some examples of the present disclosure, the position range of the starting node and the size of the subgraph can be limited so that the union of the multiple subgraphs is equal to the training graph KG1. In this way, all the information contained in the training graph KG1 can be used to train the encoder Enc.

The plurality of subgraphs is then deformed at the deformation module 332 to generate a positive sample set and a negative sample set for the plurality of subgraphs. In some examples of the present disclosure, each of the plurality of subgraphs may be used as a candidate subgraph and a random masking operation is performed on the candidate subgraphs to generate at least one positive sample. Here, the mask used by the random masking operation matches the candidate subgraph. In one example, the masking operation may be performed on a node, an edge, or a node attribute. The positive sample may lack a node, an edge, or a node attribute relative to the candidate subgraph. In parallel, erroneous node information (e.g., information about whether a certain node is included and attribute information of the node) or edge information may be added to the candidate subgraph to generate at least one negative sample. After several positive samples and negative samples are generated for each of the subgraphs, the positive samples of these subgraphs may be referred to as the positive sample set. Similarly, the negative samples of these subgraphs may be referred to as the negative sample set.

In one example, the subgraphs may be deformed by the following formula:

$$Vi=ti(A, X') \quad (2)$$

where A represents the adjacency matrix of the subgraph, X' represents the node embedding of all the nodes in the subgraph (the node embedding x' of each node in the subgraph can be generated according to Formula (1) and all x' are combined in X'), Vi represents the i-th deformation of the subgraphs (can also be regarded as the i-th view of the subgraph), and ti() represents the i-th function used to perform the deformation operation. i is greater than or equal to 1 and less than or equal to k. k may be a constant determined empirically.

The plurality of subgraphs and the positive sample sets and negative sample sets of the plurality of subgraphs can be input into the encoder Enc to generate the encoded representation Pset of the positive samples and the encoded representation Nset of the negative samples. The encoded representation Pset of the positive samples and the encoded representation Nset of the negative samples can be represented as node embeddings.

In one example, the encoded representation of the i-th deformation of the subgraph may be generated by the following formula:

$$hi=f(Vi) \quad (3)$$

where Vi represents the i-th deformation of the subgraph, hi represents the encoded representation corresponding to the i-th deformation of the subgraph, and f() represents the encoding function performed by the encoder Enc. i is greater than or equal to 1 and less than or equal to k. k may be a constant determined empirically.

In each iterative training process, the mutual information (e.g., mutual information neural estimation, noise contrast estimation, and JS divergence) between graph representations (positive samples) for the same subgraph instance is maximized to learn both the structural and semantic information of the data. By contrastive learning, the encoded representation Pset of the positive samples of the plurality of subgraphs is closer and closer in the vector space, while the encoded representation Pset of the positive samples and the encoded representation Nset of the negative samples of the plurality of subgraphs are farther and farther away in the vector space.

In one example, the mutual information between graph representations for the same subgraph instance can be maximized by the following formula:

$$\max(MI(hi,hj)) \quad (4)$$

where hi represents the encoded representation corresponding to the i-th deformation of the subgraph, hj represents the encoded representation corresponding to the j-th deformation of the subgraph, and MI () represents the function used to calculate the mutual information. i is greater than or equal to 1 and less than or equal to k. k may be a constant determined empirically. j is not equal to i.

After the above operations, a trained graph neural network can be obtained. The graph neural network may only comprise the encoder Enc. The graph neural network generated by the above operations can be used as a basic graph neural network model. The trained parameters of the base graph neural network model can be stored for subsequent use.

The inventors of the present disclosure note that, in response to new business demand scenarios, the input knowledge graph may be updated, the training strategy may be changed (the training strategy may include: for example, supervised training strategies and self-supervised training strategies), and the complexity of the graph neural network model may also need to be reselected. Therefore, especially for heterogeneous graphs (which include different types of nodes and edges), the structure and properties of the knowledge graph need to be reanalyzed. In this case, the knowledge acquired from the existing knowledge graph is difficult to reuse directly, and a new graph neural network needs to be generated. Despite the differences in different knowledge graphs, there may still be some duplication of knowledge between the knowledge graphs, and the new graph neural network will relearn similar knowledge, wasting computing resources.

Some examples of the present disclosure propose that a prediction head can be added at the output layer of a trained basic graph neural network model to generate an updated graph neural network. The prediction head can be determined based on the downstream tasks. Since the basic graph neural network model has been trained and has domain knowledge, in some application scenarios, the updated graph neural network can be directly used to cooperate with downstream tasks. In this way, different application scenarios can reuse the basic graph neural network model, avoiding the waste of computing resources caused by the graph neural network relearning similar knowledge.

Further, to further improve the prediction effect, the updated graph neural network can also be fine-tuned. The inventors of the present disclosure note that graph neural network models are typically complex. Using more labeled data for supervised training of the graph neural network model is time-consuming and consumes a great deal of computing resources. If less labeled data is used for supervised training of the graph neural network model, it is easy to cause overfitting of the graph neural network model, making the graph neural network model unable to be used across tasks. Thus, in some examples of the present disclosure, the basic graph neural network model can be trained in a self-supervised manner to save computing resources. In the process of fine-tuning the updated graph neural network, the updated graph neural network is then trained in a supervised manner using labeled data. In this way, the time required for training is shorter and less computing resources are required, which is less likely to cause overfitting of the model. FIG. 4 illustrates an exemplary schematic diagram of the fine-tuning process.

In the example of FIG. 4, a prediction head 440 adapted to the graph neural network (corresponding to encoder Enc) is determined according to the downstream task 48. The prediction head 440 is added at the output layer of the graph neural network (corresponding to the output layer of the encoder Enc) to generate an updated graph neural network 400. The prediction head 440 may correspond to node-level tasks (tasks for node classification), edge-level tasks (tasks for edge classification), and graph-level tasks (tasks for graph classification). The updated graph neural network 400 may then be trained using the training graph set KG2 with ground truth labels. Alternatively, the updated graph neural network 400 may also be trained using the training graph set KG2 without ground truth labels to reduce the amount of computation. It should be noted that only one example of a graph in the training graph set KG2 is schematically illustrated in FIG. 4, and the training graph in the training graph set KG2 may in fact include more nodes and edges. Here, the ground truth labels of the training graph set KG2 and the loss function used in the process of training the updated graph neural network 400 are determined based on the downstream task 48. The training graph set KG2 may include one or more training graphs. The training graphs in the training graph set KG2 may be completely different from, partially the same as, or completely the same as the training graph KG1 in FIG. 3.

It should be noted that even though the updated graph neural network needs to be fine-tuned, different application scenarios still reuse the basic graph neural network model and can therefore avoid the waste of computing resources caused by the graph neural network relearning similar knowledge. In some examples of the present disclosure, the updated graph neural network and the basic graph neural network model belong to the same domain, such as different factories under the same business line of the same company. In this way, the domain knowledge learned by the basic graph neural network model and the real semantic and contextual information in the domain can be better reused so that the updated graph neural network can provide prediction accuracy.

Examples of the present disclosure also provide a method of using a graph neural network. The graph neural network is generated using the generation method 200 shown in FIG. 2. In this usage method, the graph to be tested is input into the graph neural network to obtain the output node embedding of the graph to be tested. The output node embedding of the graph to be tested is input into the prediction head to obtain the prediction results about the graph to be tested. The prediction head is determined according to the downstream task.

In the application scenario of an industrial visualization system, the updated graph neural network 400 may predict the machine status to verify whether the machine is online (connected to the production execution system MES). The updated graph neural network 400 may predict whether a target machine is installed in a certain work unit.

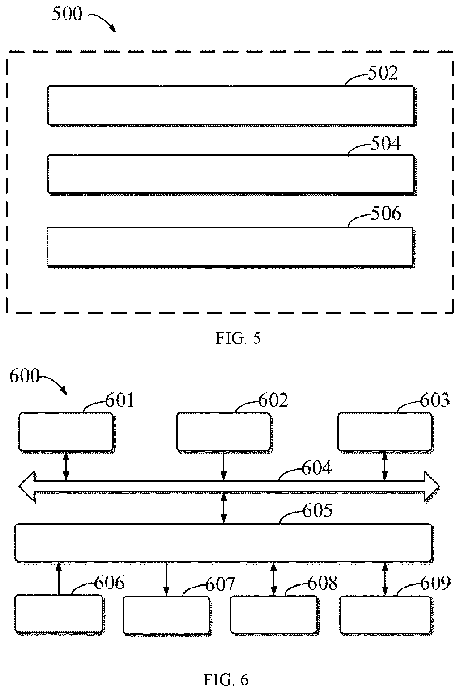

FIG. 5 illustrates a schematic diagram of a device 500 for generating a neural network according to examples of the present disclosure. The generating device 500 may include multiple modules for executing the corresponding steps in the generation method 200 as discussed in FIG. 2. As shown in FIG. 5, the generating device 500 comprises: a generation module 502, a determination module 504, and a training module 506. The generation module 502 is configured to generate at least one categorical embedding E based on target domain knowledge. The determination module 504 is configured to determine the node embedding NE of the training graph KG1 using at least one categorical embedding E and the original node features of the training graph KG1. The training module 506 is configured to generate a graph neural network using the determined node embedding NE of the training graph KG1.

FIG. 6 illustrates a schematic block diagram of an electronic device 600 suitable for implementing examples of the present disclosure. As shown in the figure, the electronic device 600 comprises a central processing unit (CPU) 601, which can execute various appropriate actions and processing based on computer program instructions stored in a read-only memory (ROM) 602 or computer program instructions loaded onto a random access memory (RAM) 603 from a storage unit 608. Various programs and data required for the operation of the electronic device 600 may also be stored in the RAM RAM 603. The CPU 601, the ROM 602, and the RAM 603 are interconnected through a bus 604. An input/output (I/O) interface 605 is also connected to the bus 604.

Multiple components in the electronic device 600 are connected to the I/O interface 605, such as: an input unit 606, such as a keyboard, mouse, etc.; an output unit 607, such as various types of display, speaker, etc.; a storage unit 608, such as a disk, optical disc, etc.; as well as a communication unit 609, such as a network interface card, modem, wireless communication transceiver, etc. The communication unit 609 allows the electronic device 600 to exchange information/data with other apparatuses through computer networks such as the Internet and/or various telecommunication networks.

The various processes and processing described above may be executed by the processing unit 601. For example, in some examples, the generation method 200 may be realized as a computer software program that it is tangibly contained in a machine-readable medium, such as the storage unit 608. In some examples, part or all of the computer programs may be loaded and/or installed onto the electronic device 600 through the ROM 602 and/or the communication unit 609. When the computer program is loaded onto the RAM 603 and executed by the CPU 601, one or more actions of the generation method 200 described above may be performed.

In summary, the method of generating a graph neural network consistent with examples of the present disclosure are capable of infusing domain knowledge into a graph neural network such that the graph neural network understands the domain knowledge. In this way, the graph neural network can understand the true semantic and contextual information of the target domain, thus granting it domain generality. Further, a graph neural network infused with domain knowledge according to the examples of the present disclosure can be used as a basic graph neural network model. By adding an adapted prediction head after the basic graph neural network model, an updated graph neural network can be generated. In this way, the basic graph neural network model can be used to predict other knowledge graphs in the domain, making the basic graph neural network model domain-general and making the prediction results of downstream tasks more accurate, relevant, and reliable. In addition, by using the basic graph neural network model plus the prediction head, the computing resources used to learn the same knowledge can be significantly reduced, thereby increasing computational efficiency. Moreover, since the prediction head can be selected according to the downstream task, the updated graph neural network is scalable. On the other hand, in examples of the present disclosure, a self-supervised training method can be used when training the basic graph neural network model. Supervised training is used when fine-tuning the updated graph neural network. In this way, less labeled data is required to obtain a fine-tuned graph neural network, which can save computing resources and alleviate the problem of model overfitting. The graph neural network according to the examples of the present disclosure is used particularly in dynamic industrial environments.

The present disclosure may be a method, device, system and/or computer program product. The computer program product may comprise a computer-readable storage medium uploaded with computer-readable program instructions for performing various aspects of the present disclosure.

The computer-readable storage medium may be a tangible device that maintains and stores instructions used by instruction execution devices. The computer-readable storage medium, for example, may be - but is not limited to - an electrical storage device, a magnetic storage device, an optical storage device, an electromagnetic storage device, a semiconductor memory device, or any suitable combination of the above. More specific examples (non-exhaustive list) of computer-readable storage media include: random access memory (RAM), read-only memory (ROM), wipeable programmable read-only memory (EPROM or flash memory), static random access memory (SRAM), and any suitable combination of the above. The computer-readable storage medium used herein is not to be construed as transient signals per se, such as radio waves or other freely propagating electromagnetic waves, electromagnetic waves propagating through waveguides or other transmission media (e.g., light pulses through fiber optic cables), or electrical signals transmitted through wires.

The computer-readable program instructions described herein may be downloaded to various computing/processing devices from the computer-readable storage medium, or downloaded from networks, such as the Internet, a local area network, a wide-area network, and/or a wireless network to external computers or external storage devices. The networks may comprise copper transmission cables, optical fiber transmissions, wireless transmissions, routers, firewalls, switches, gateway computers, and/or edge servers. The network adapter card or network interface in each computing/processing device receives the computer-readable program instructions from the network and forwards the computer-readable program instructions for storage in computer-readable storage medium of each computing/processing device.

The computer program instructions for performing operations of the present disclosure can be assembly instructions, instruction set architecture (ISA) instructions, machine instructions, machine-dependent instructions, microcode, firmware instructions, state-setting data, or source code or object code written in any combination of one or more programming languages, wherein the programming languages comprise object-oriented programming languages-such as Smalltalk, C++, etc.-and conventional procedural programming languages-such as the "C" programming language or similar programming languages. Computer-readable program instructions may be fully executed on the user's computer, partially executed on the user's computer, executed as an independent software package, partially executed on the user's computer and partially executed on a remote computer, or fully executed on a remote computer or server. In the case of remote computers, the remote computer can be connected to the user's computer through any type of network-such as a local area network (LAN) or a wide area network (WAN)-or can be connected to an external computer (for example, through the Internet using an Internet Service Provider). In some examples, electronic circuits, such as programmable logic circuits, field-programmable gate arrays (FPGA), or programmable logic arrays (PLA), can be personalized by utilizing state information of the computer-readable program instructions, which can execute the computer-readable program instructions to implement various aspects of the present disclosure.

Various aspects of the present disclosure are described herein with reference to flow charts and/or block diagrams of the method, device (system), and computer program product according to examples of the present disclosure. It should be understood that every block in the flow charts and/or block diagrams and the combinations of various blocks in the flow charts and/or block diagrams may be implemented by computer-readable program instructions.

These computer-readable program instructions may be provided to general-purpose computers, dedicated computers or the processing units of other programmable data processing devices, thereby producing a type of machine, such that when these instructions are executed by the computers or processing units of other programmable data processing devices, an apparatus that realizes the functions/actions stipulated in one or more boxes in the flow charts and/or block diagrams is produced. These computer-readable program instructions may also be stored in a computer-readable storage medium, and these instructions enable computers, programmable data processing apparatuses, and/or other devices to operate in a specific manner. Therefore, the computer-readable media containing instructions comprise a manufactured product that includes instructions for implementing various aspects of the functions/actions specified in one or more blocks in the flow charts and/or block diagrams.

The computer-readable program instructions may also be loaded onto a computer, other programmable data processing devices, or other devices, enabling a series of operational steps to be executed on the computer, other programmable data processing devices, or other devices to generate a computer-implemented process. This enables the instructions executed on the computer, other programmable data processing devices, or other devices to implement the functions/actions specified in one or more boxes in the flow charts and/or block diagrams.

The flow charts and block diagrams in the accompanying drawings show the system architecture, functions and operations that may be implemented based on the system, method, and computer program product according to the plurality of examples of the present disclosure. Regarding this, every block in the flow charts or block diagrams can represent a part of a module, program section, or instructions, wherein the part of the module, program section, or instructions contains one or a plurality of executable instructions that are used to implement the stipulated logic function. In some alternative implementations, the occurrence of the function indicated in the blocks may also differ from the sequence indicated in the accompanying drawings. For example, two continuous blocks may actually be substantially performed in a concurrent manner and they may also sometimes be performed in reverse order, depending on the functions involved. It must also be noted that every block in the block diagrams and/or flow charts, as well as combinations of blocks in the block diagrams and/or flow charts may be implemented by dedicated hardware-based systems used to perform the stipulated functions or actions, or implemented by using combinations of dedicated hardware and computer instructions.

Unless the context clearly dictates otherwise, as used herein and in the appended Claims, the singular forms of the words include the plural and vice versa. Thus, when referring to the singular, the plural number of the corresponding term is generally included. Where the term "example" is used herein, particularly when it is followed by a group of terms, the "example" is merely exemplary and illustrative and should not be considered exclusive or comprehensive.

Further aspects and areas of applicability will become apparent from the description provided herein. It should be understood that various aspects of the present application may be implemented alone or in combination with at least one other aspect. It will also be understood that the description and specific examples herein are intended to be illustrative only and not intended to limit the scope of the present application.

The various examples of the present disclosure have been described above. The descriptions provided are exemplary and not exhaustive, and they are also not limited to the disclosed examples. Many modifications and variations will be apparent to those skilled in the art without departing from the scope and spirit of the described examples. The selection of terms used in the present description aims to best explain the principles and actual application of the various examples, the technological improvements in the technology in the market, or allow others of ordinary skill in the art to understand the various examples disclosed in the present description.

## Claims

1. A generation method (200) of a graph neural network, comprising:

   generating (202) at least one categorical embedding (E) according to target domain knowledge;
   determining (204) a node embedding (NE) of a training graph (KG1) using the at least one categorical embedding (E) and original node features of the training graph (KG1); and
   generating (206) the graph neural network using the determined node embedding (NE) of the training graph (KG1).

2. The generation method (200) according to claim 1, wherein generating (202) at least one categorical embedding (E) according to target domain knowledge comprises:

   obtaining an ontology of the target domain knowledge (35); and
   generating the at least one categorical embedding (E) from the ontology (35) according to the entity type included in the ontology (35).

3. The generation method (200) according to claim 2, wherein generating the at least one categorical embedding (E) from the ontology (35) according to the entity type included in the ontology (35) comprises:

   generating an assertion set (312) and a term set (313) of the ontology (35) according to the explicit knowledge in the ontology (35) and the schema of the ontology (35); and
   generating, by a word embedding model (314), a categorical embedding corresponding to the entity type included in the ontology (35) according to the assertion set (312) and the term set (313).

4. The generation method (200) according to claim 3, wherein generating the at least one categorical embedding (E) from the ontology (35) according to the entity type included in the ontology (35) further comprises:

   performing logical reasoning on the ontology (35) according to the explicit knowledge in the ontology (35) and the schema of the ontology (35) to obtain the implicit knowledge in the ontology (35);
   wherein the assertion set (312) and the term set (313) of the ontology (35) are also generated according to the implicit knowledge in the ontology (35).

5. The generation method (200) according to any one of claims 1 to 4, wherein the training graph (KG1) and the target domain knowledge belong to the same domain and determining (204) a node embedding (NE) of the training graph (KG1) using the at least one categorical embedding (E) and original node features of the training graph (KG1) comprises: taking each node in the training graph (KG1) as a candidate node and performing the following operations on the candidate node:

   determining a candidate entity type corresponding to the candidate node;
   selecting, from the at least one categorical embedding (E), a categorical embedding corresponding to the candidate entity type; and
   concatenating the categorical embedding corresponding to the candidate entity type with the node feature vector corresponding to the candidate node in the original node features of the training graph (KG1) to generate a node embedding (NE) of the candidate node.

6. The generation method (200) according to claim 5, wherein selecting a categorical embedding corresponding to the candidate entity type from the at least one categorical embedding (E) comprises: in response to the at least one categorical embedding (E) not having a categorical embedding corresponding to the candidate entity type, setting the categorical embedding corresponding to the candidate entity type as the default categorical embedding.

7. The generation method (200) according to any one of claims 1 to 4, wherein generating (206) the graph neural network using the determined node embedding (NE) of the training graph (KG1) comprises:

   generating a plurality of subgraphs of the training graph (KG1);
   deforming the plurality of subgraphs to generate a positive sample set and a negative sample set for the plurality of subgraphs; and
   by contrastive learning, training the graph neural network using the plurality of subgraphs and the positive sample set and the negative sample set of the plurality of subgraphs.

8. The generation method (200) according to claim 7, wherein generating a plurality of subgraphs of the training graph (KG1) comprises:

   randomly selecting several nodes from the training graph (KG1) as starting nodes; and
   using a random walk starting from each starting node to obtain at least one subgraph.

9. The generation method (200) according to claim 7, wherein deforming the plurality of subgraphs to generate a positive sample set and a negative sample set for the plurality of subgraphs comprises: using each subgraph in the plurality of subgraphs as a candidate subgraph and performing the following operations on the candidate subgraph:

   performing a random masking operation on the candidate subgraph to generate at least one positive sample; and
   adding erroneous node information or edge information to the candidate subgraph to generate at least one negative sample;
   wherein the positive sample set comprises positive samples of the plurality of subgraphs and the negative sample set comprises negative samples of the plurality of subgraphs.

10. The generation method (200) according to any one of claims 1 to 4, further comprising:

    determining a prediction head (440) adapted to the graph neural network according to a downstream task (48);
    adding the prediction head (440) at the output layer of the graph neural network to generate an updated graph neural network (400); and
    training the updated graph neural network (400) using a training graph set (KG2) with ground truth labels;
    wherein the ground truth labels of the training graph set (KG2) and the loss function used in training the updated graph neural network (400) are determined according to the downstream task (48).

11. The generation method (200) according to any one of claims 1 to 4, wherein the training graph (KG1) is a knowledge graph generated for a dynamic industrial environment.

12. A method of using a graph neural network, wherein the graph neural network is generated using the generation method (200) according to any one of claims 1 to 11, the usage method comprising:

    inputting a graph to be tested into the graph neural network to obtain the output node embedding of the graph to be tested; and
    inputting the output node embedding of the graph to be tested into a prediction head (440) to obtain a prediction result about the graph to be tested, wherein the prediction head (440) is determined according to the downstream task (48).

13. A generating device (500) of a graph neural network, comprising:

    a generation module (502) configured to generate at least one categorical embedding (E) based on target domain knowledge;
    a determination module (504) configured to determine a node embedding (NE) of the training graph (KG1) using the at least one categorical embedding (E) and the original node features of the training graph (KG1); and
    a training module (506) configured to generate the graph neural network using the determined node embedding (NE) of the training graph (KG1).

14. An electronic device (600), comprising:

at least one processor, and

a memory coupled to the at least one processor and having instructions stored thereon, wherein the instructions, when executed by the at least one processor, cause the electronic device (600) to execute the generation method (200) according to any one of claims 1-11 or the usage method according to claim 12.

15. A computer program product that is tangibly stored on a non-transitory computer-readable medium and includes machine-executable instructions that are used to execute the generation method (200) according to any one of claims 1-11 or the usage method according to claim 12.

FIG. 1

200

202

204

206

FIG. 2

FIG. 3

FIG. 4

500

502

504

506

FIG. 5

600

601

602

603

604

605

606 607 608 609

FIG. 6

Europäisches
Patentamt

European
Patent Office

Office européen
des brevets

# EUROPEAN SEARCH REPORT

**Application Number**

EP 25 18 0673

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PETAR VELI\V{C}KOVI\'C ET AL: "Deep Graph Infomax", ARXIV.ORG, CORNELL UNIVERSITY LIBRARY, 201 OLIN LIBRARY CORNELL UNIVERSITY ITHACA, NY 14853, 27 September 2018 (2018-09-27), XP081195242, * abstract * * chapters 1-6; page 1 - page 10; figures 1-3 * ----- | 1-15 | INV. G06N3/0455 G06N3/0895 G06N5/022 |
| X | YUNING YOU ET AL: "Graph Contrastive Learning with Augmentations", ARXIV.ORG, CORNELL UNIVERSITY LIBRARY, 201 OLIN LIBRARY CORNELL UNIVERSITY ITHACA, NY 14853, 3 April 2021 (2021-04-03), XP081926644, * abstract * * chapters 1-6; page 9; figures 1-5; tables 1-6 * ----- | 1-15 | |
| X | JIAOYAN CHEN ET AL: "Ontology Embedding: A Survey of Methods, Applications and Resources", ARXIV.ORG, CORNELL UNIVERSITY LIBRARY, 201 OLIN LIBRARY CORNELL UNIVERSITY ITHACA, NY 14853, 16 June 2024 (2024-06-16), XP091790982, * abstract * * chapters I-VII; page 1 - page 17; figures 1-9 * ----- -/-- | 1-15 | TECHNICAL FIELDS SEARCHED (IPC) G06N |

The present search report has been drawn up for all claims

| Place of search | Date of completion of the search | Examiner |
|---|---|---|
| The Hague | 9 October 2025 | Hasnas, Sergiu |

EPO FORM 1503 03.82 (P04C01)

**page 1 of 2**

Europäisches
Patentamt

European
Patent Office

Office européen
des brevets

**EUROPEAN SEARCH REPORT**

Application Number

EP 25 18 0673

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Zhou Wentao ET AL: "Inductive Relation Inference of Knowledge Graph Enhanced by Ontology Information", , 7 October 2023 (2023-10-07), XP093323653, Retrieved from the Internet: URL:https://openreview.net/pdf?id=cVAHzYRVUO [retrieved on 2025-10-09] * abstract * * chapters 1-6; page 1 - page 9; figures 1-4 * ----- | 1-15 | |

TECHNICAL FIELDS
SEARCHED     (IPC)

The present search report has been drawn up for all claims

| Place of search | Date of completion of the search | Examiner |
|---|---|---|
| The Hague | 9 October 2025 | Hasnas, Sergiu |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)